# EUROPÄISCHE PATENTSCHRIFT

(11) **EP 2 816 276 B1**
(45) Veröffentlichungstag und Bekanntmachung des Hinweises auf die Patenterteilung: **17.02.2021**
(21) Anmeldenummer: 14169773.0
(22) Anmeldetag: 26.05.2014
(51) Int. Cl.: F21S 43/14, F21S 43/27, F21S 45/49

(54) **Kraftfahrzeug mit einer Leuchtvorrichtung**
Motor vehicle with a lighting device
Véhicule automobile doté d'un dispositif d'éclairage

(30) Priorität: 22.06.2013 DE 102013010489; 02.04.2014 DE 102014206238
(43) Veröffentlichungstag der Anmeldung: 24.12.2014
(73) Patentinhaber: Volkswagen Aktiengesellschaft, 38440 Wolfsburg (DE)
(72) Erfinder: Geyer, Christoph, 38547 Wettmershagen (DE)

(56) Entgegenhaltungen:
- EP-A1- 1 970 616
- EP-A2- 1 167 870
- EP-A2- 1 506 892
- WO-A1-2013/030040
- DE-A1- 2 407 451
- DE-A1- 10 114 460
- DE-A1- 10 259 623
- DE-A1-102005 044 447
- DE-A1-102011 016 408
- DE-A1-102011 117 733
- JP-A- 2009 262 911
- JP-A- 2010 030 336
- US-A1- 2004 037 087
- US-A1- 2007 014 122
- US-B1- 6 920 269

## Beschreibung

Die vorliegende Erfindung betrifft ein Kraftfahrzeug, welches ein Karosserieteil umfasst, welches einen inneren Bereich von einem äußeren Bereich des Kraftfahrzeugs zumindest teilweise räumlich trennt und eine Öffnung aufweist sowie eine Leuchtvorrichtung umfasst, welche mindestens ein Leuchtmittel, einen Lichtleiter mit einer Einkoppelfläche und einer Auskoppelfläche aufweist, wobei die Einkoppelfläche vor dem mindestens einen Leuchtmittel angeordnet ist, so dass von dem Leuchtmittel emittiertes Licht in die Einkoppelfläche eingestrahlt wird.

Aus der DE 10 2011 078 607 A1 ist eine Beleuchtungseinrichtung für ein Kraftfahrzeug bekannt, die einen ersten Lichtleiter und einen zweiten Lichtleiter aufweist, der der Form des ersten Lichtleiters folgend gestaltet und benachbart zum ersten Lichtleiter verlaufend angeordnet ist. Die Beleuchtungseinrichtung zeichnet sich dadurch aus, dass der erste Lichtleiter eine erste Längsseite mit ersten Auskoppelelementen aufweist, die aus der ersten Längsseite herausragen und die erste Lichtaustrittsflächen aufweisen, der zweite Lichtleiter eine zweite Längsseite mit zweiten Auskoppelelementen aufweist, die aus der zweiten Längsseite herausragen und zweite Lichtaustrittsflächen aufweisen, und dass die beiden Lichtleiter relativ zueinander so angeordnet sind, dass die zweite Längsseite der ersten Längsseite gegenüber liegt.

Ferner sind aus der DE 10 2009 058 530 A1 Leuchteneinheitskonfigurationen für Kraftfahrzeuge bekannt, wobei die Leuchteneinheit in einer Ausführungsform eine Lichtquelle wie z. B. ein Leuchtdioden (LED)-Modul umfasst, welches an der Fahrzeugstruktur angebracht ist und im Inneren des Fahrzeugs benachbart zu einer Durchbrechung der Fahrzeugstruktur angeordnet ist.

Die DE 101 14 460 A1 betrifft eine Leuchte für Kraftfahrzeuge, welche hinter einer Fahrzeugscheibe angeordnet und als dritte Bremsleuchte in einer kompakten Bauweise im Schwarzbereich des Randes der Fahrzeugscheibe des Kraftfahrzeuges angeordnet ist.

Die EP 1 167 870 A2 offenbart eine Leuchte für ein Kraftfahrzeug, welche eine Abschlussscheibe mit einem Lichtleitelement darin aufweist, wobei die Abschlussscheibe einen umlaufenden Rand aufweist, dessen Stirnflächen über eine Schweißnaht mit dem Aufnahmerand eines Leuchtengehäuses verschweisst ist und die Abschlussscheibe eine gewölbte Form aufweist, so dass die Auskoppelfläche gegenüber dem Aufnahmerand des Leuchtengehäuses versetzt ist.

Die US 2007/014122 A1 beschreibt ein Leuchtmittel, welches einen Lichtleiter umfasst und in eine Fahrzeugtür integriert ist, wobei das Leuchtmittel im geöffneten Zustand der Tür mittels des Lichtleiters einen Vorraum des Kraftfahrzeuges auszuleuchten vermag.

DE 102 59 623 A1 offenbart eine Fahrzeugleuchte für einen Innenraum eines Fahrzeuges bei der ein Lichtleiter eine Öffnung eines Trägerteils durchdringt. Die Lichtauskoppelfläche wird von einer wulstförmigen Verdickung gebildet, die über das Trägerteil übersteht und deren Ausmaße größer sind als die Öffnung des Trägerteils.

US 6,920,269 B1 offenbart eine Leuchtvorrichtung für ein Kraftfahrzeug. Eine Außenlichtscheibe wird von einer Vielzahl von in einen Grundkörper eingebetteten Lichtleitern gebildet. Die Außenlichtscheibe ist in eine Öffnung eines Karosserieteils integriert, wobei die Außenfläche flächig mit dem Karosserieteil abschließt. Den Einkoppelflächen der Lichtleiter ist eine Lichtquelle zugeordnet, deren Licht über einen Reflektor auf die Vielzahl der Lichtleiter verteilt wird.

DE 10 2005 044 447 A1 offenbart eine Leuchte, insbesondere für Außenrückspiegel von Fahrzeugen. Hierbei ist eine Leuchtvorrichtung mit einem Leuchtmittel und ein Lichtleiter vorgesehen. Der Lichtleiter ist in eine Öffnung eines Karosserieteiles des Fahrzeuges eingeführt, so dass eine Auskoppelfläche die Öffnung des Karosserieteiles nach außen ausfüllt.

Die Bedeutung von Licht im Straßenverkehr als auch von Ambientelicht in und an einem Kraftfahrzeug hat in den letzten Jahren stetig zugenommen. Dies ist unter anderem auch auf die Zunahme der Bedeutung von zum Beispiel den Fahrzeug-Scheinwerfern als herausstechende Designmerkmale eines Kraftfahrzeugs insgesamt zurückführbar. Allerdings sind die derzeit auf dem Markt verfügbaren Beleuchtungssysteme des Standes der Technik sehr komplex im Aufbau beziehungsweise sehr bauteilaufwändig. Es ist daher Aufgabe der vorliegenden Erfindung, ein Kraftfahrzeug mit einer Leuchtvorrichtung bereitzustellen, welche einen einfachen Aufbau aufweist, kostengünstig ist sowie unter gegenüber dem Stand der Technik verringertem Bauteilbedarf herstellbar und innerhalb des Kraftfahrzeuges platzsparend verbaubar ist.

Die erfindungsgemäße Aufgabe wird mit einem Kraftfahrzeug gemäß dem Hauptanspruch gelöst. Vorteilhafte Ausgestaltungen sind in den Unteransprüchen beschrieben.

Erfindungsgemäß wird ein Kraftfahrzeug bereitgestellt, welches ein Karosserieteil umfasst, welches einen inneren Bereich von einem äußeren Bereich des Kraftfahrzeugs zumindest teilweise räumlich trennt und eine Öffnung aufweist. Ferner umfasst das Kraftfahrzeug eine Leuchtvorrichtung, welche mindestens ein Leuchtmittel sowie einen Lichtleiter mit einer Einkoppelfläche und einer Auskoppelfläche umfasst, wobei die Einkoppelfläche vor dem mindestens einen Leuchtmittel angeordnet ist, so dass von dem Leuchtmittel emittiertes Licht in die Einkoppelfläche eingestrahlt wird. Erfindungsgemäß ist die Leuchtvorrichtung im inneren Bereich des Kraftfahrzeugs angeordnet, und der Lichtleiter ragt mit seiner Auskoppelfläche von innen in die Öffnung des Karosserieteils hinein.

Der Lichtleiter ist totalreflektierend ausgeführt. Solche Lichtleiter eignen sich besonders gut für die Verwendung innerhalb der Leuchtvorrichtungen erfindungsgemäßer Kraftfahrzeuge, da nur ein geringer Teil des in die Einkoppelfläche des Lichtleiters eingekoppelten Lichtes an der nicht die Auskoppelfläche des Lichtleiters ausmachenden Oberfläche des Lichtleiters verloren geht.

Die Einkoppelfläche ist durch einen Kollimator, also durch eine Kollimatorlinse gebildet. Ferner bevorzugt ist die Einkoppelfläche durch eine Fresnel Optik, also durch eine Fresnel-Linse gebildet. Des Weiteren bevorzugt umfasst die Einkoppelfläche einen Kollimator beziehungsweise eine Fresnel Optik, also eine Kollimatorlinse beziehungsweise eine Fresnel-Linse. In anderen Ausführungsformen von Leuchtvorrichtungen erfindungsgemäßer Kraftfahrzeuge erfolgt die Einkopplung von Licht in den Lichtleiter mittels eines weiteren Lichtleitelementes, dessen Auskoppelseite parallel zu der Einkoppelfläche des Lichtleiters ausgebildet ist.

Erfindungsgemäß ist ein lichtstreuender Kunststoff in die Auskoppelfläche des Lichtleiters eingebracht. Dadurch kann mittels der Leuchtvorrichtung beispielsweise ein diffuses Lichtbild erzeugt werden, ohne dass der Verbau spezieller Optiken notwendig ist. Ferner bevorzugt handelt es sich bei dem lichtstreuenden Kunststoff um ein Polymethylmethacrylat. Polymethylmethacrylat weist eine hervorragende Chemikalienbeständigkeit sowie sehr gute mechanische Eigenschaften auf. Ferner bevorzugt handelt es sich bei dem lichtstreuenden Kunststoff um einen diffusen Kunststoff. Bevorzugt handelt es sich bei dem Kunststoff um ein Polycarbonat. Des Weiteren bevorzugt ist der Kunststoff transparent und/oder ist der Kunststoff mit Streupartikeln versetzt beziehungsweise Streupartikel aufweisend gespritzt.

Ferner schließt die Auskoppelfläche des Lichtleiters vorzugsweise flächig mit den die Ränder der Öffnung bildenden Abschnitten des Karosserieteils ab, so dass das Karosserieteil sowie der Lichtleiter der Leuchtvorrichtung im fertig zusammengebauten Zustand des Kraftfahrzeugs von außen betrachtet eine durchgehende Außenkontur des Kraftfahrzeuges bilden.

Bevorzugt sind die die Ränder der Öffnung bildenden Abschnitte des Karosserieteils in Richtung des inneren Bereiches des Kraftfahrzeugs gewölbt und verlaufen im zusammengebauten Zustand des Kraftfahrzeugs zumindest in einem Teilbereich dieses Abschnittes parallel zu dem Lichtleiter.

Der Vorteil eines derartigen Kraftfahrzeugs ist, dass bei der Realisierung von dessen erfindungsgemäßen Leuchtvorrichtung beziehungsweise Leuchtvorrichtungen auf eine Außenlichtscheibe und/oder gar auf ein Gehäuse verzichtet werden kann. Ferner sind die erfindungsgemäßen Leuchtvorrichtungen derartiger Kraftfahrzeuge kostengünstig und weisen einen sehr einfachen Aufbau auf. Da das erfindungsgemäße Kraftfahrzeug keine Außenlichtscheibe aufweist, ist eine Betauung der sichtbaren Komponenten der Leuchtvorrichtung, insbesondere der Auskoppelfläche des Lichtleitelementes der Leuchtvorrichtung, für einen äußeren Betrachter nicht sichtbar. Ferner weist die Leuchtvorrichtung erfindungsgemäßer Kraftfahrzeuge eine sehr hohe optische Effizienz auf.

Bevorzugt umfasst die Leuchtvorrichtung ferner einen Kühlkörper, welcher dazu ausgebildet ist, das mindestens eine Leuchtmittel sowie den Lichtleiter aufzunehmen und das Leuchtmittel zu kühlen. Die Aufnahme von Leuchtmitteln und Lichtleitern durch den Kühlkörper ist ausschlaggebend für den kompakten und platzsparenden Aufbau der Leuchtvorrichtung, da durch selbige auf zusätzlich vorzusehende Mittel zur Fixierung der Komponenten der Leuchtvorrichtung verzichtet werden kann.

In einer bevorzugten Ausführungsform sind sowohl das mindestens eine Leuchtmittel als auch der Lichtleiter fest mit dem Kühlkörper verbunden und der Kühlkörper ist im inneren Bereich fest mit dem Kraftfahrzeug verbunden. In einer derartigen Ausführungsform bildet der Kühlkörper also nicht nur eine wesentliche beziehungsweise die tragende Komponente im Aufbau der Leuchtvorrichtung, sondern dient gleichzeitig der Fixierung der Leuchtvorrichtung innerhalb des Kraftfahrzeugs. In einem derart ausgeführten Kraftfahrzeug ist der von der Realisierung beziehungsweise von der Anordnung der Leuchtvorrichtung innerhalb des Kraftfahrzeugs beanspruchte Bauraum abermals reduziert. Des Weiteren bevorzugt ist das Leuchtmittel und/oder der Lichtleiter über einen Formschluss oder einen Kraftschluss mit dem Kühlkörper verbunden. Des Weiteren bevorzugt ist das Leuchtmittel und/oder der Lichtleiter über eine stoffschlüssige Verbindung mit dem Kühlkörper verbunden. Besonders bevorzugt weist der Lichtleiter mindestens eine Befestigungsnase auf, welche formschlüssig mit mindestens einer auf dem Kühlköper angeordneten oder aus diesem ausgeformten Halteschiene verbunden ist. Ganz besonders bevorzugt ist der Lichtleiter über die mindestens eine Befestigungsnase mit der mindestens einen auf dem Kühlköper angeordneten oder aus diesem ausgeformten Halteschiene und somit mit dem Kühlkörper verklebt.

Besonders bevorzugt weist der Lichtleiter an seiner dem Kühlkörper zugewandten Seite direkt vor und/oder direkt hinter seiner Einkoppelfläche angeformte Rippen auf, mittels welchen der Lichtleiter auf beziehungsweise an einem Kühlkörper und/oder an einem im Kraftfahrzeug befindlichen Gehäuse fixierbar ist. Ferner bevorzugt weist der Lichtleiter unmittelbar vor und/oder unmittelbar hinter seiner Einkoppelfläche beziehungsweise benachbart zu seiner Einkoppelfläche angeformte Rippen oder andere aus dem Lichtleiter ausgeformte Befestigungsstrukturen auf, mittels welchen der Lichtleiter auf einem Kühlkörper und/oder an einem im Kraftfahrzeug befindlichen Gehäuse fixierbar ist. Bevorzugt sind die angeformten Rippen in jeweils eine am Gehäuse beziehungsweise im Kühlkörper befindliche Aufnahmeschiene beziehungsweise Aufnahmestruktur einführbar. Dadurch, dass die angeformten Rippen beziehungsweise die aus dem Lichtleiter ausgeformten Befestigungsstrukturen unmittelbar in der Nähe der Einkoppelfläche des Lichtleiters ausgebildet beziehungsweise vorgesehen sind, ist der sich durch die Rippen ergebende optische Verlust minimal beziehungsweise stark reduziert. Da nur wenige der in den Lichtleiter eingespeisten Lichtstrahlen im Bereich der angeformten Rippen beziehungsweise im Bereich der aus dem Lichtleiter ausgeformten Befestigungsstrukturen über Totalreflektion an der Wand des Lichtleiters reflektiert werden, bleibt die optische Effizienz des Lichtleiters weitgehend unbeeinträchtigt.

Ferner bevorzugt weist das Karosserieteil mindestens eine Komponente auf. Des Weiteren bevorzugt umfasst das Karosserieteil mindestens zwei Teil-Karosserieteile, welche im zusammengebauten Zustand des Kraftfahrzeugs gemeinsam die Öffnung bilden.

Bevorzugt liegt die Auskoppelfläche in einer Ebene mit den die Ränder der Öffnung bildenden Abschnitten des Karosserieteils. In derartig ausgeführten Kraftfahrzeugen ist die Leuchtvorrichtung in die Karosserie des Kraftfahrzeugs integriert. Somit steht innerhalb des Kraftfahrzeugs gegenüber dem Stand der Technik ein vergrößerter Bauraum zur Verfügung. Bevorzugt ist die Auskoppelfläche des Lichtleiters flach ausgeführt. Ferner bevorzugt weist die Auskoppelfläche des Lichteiters eine Höhe auf, welche einem Bruchteil der Länge des Lichtleiters entspricht. Besonders bevorzugt bewegt sich die Höhe des Lichtleiters in einem Bereich zwischen 0,5 cm und 3,5 cm. Besonders bevorzugt füllt die Auskoppelfläche eine im Karosserieteil des Kraftfahrzeugs gegebene Öffnung auf. Bevorzugt ist die Öffnung als Spalt oder als Fuge ausgebildet.

In einer bevorzugten Ausführungsform ist der Lichtleiter als zwei-Komponenten-Kunststoff ausgeführt. Derartige zwei-Komponenten-Kunststoffe sind besonders günstig und einfach herstellbar. Beispielsweise können die beiden Komponenten in einem zwei-Komponenten-Spritzgussverfahren gespritzt werden.

In einer bevorzugten Weiterentwicklung dieser Ausführungsform weist die erste Komponente des zwei-Komponenten-Kunststoffs einen ersten Brechungsindex auf, welcher von dem zweiten Brechungsindex der zweiten Komponente verschieden ist. Durch die Wahl der für die Realisierung des Lichtleiters zu verwendenden Materialien können über die zueinander verschiedenen Brechungsindizes der Materialien die optischen Eigenschaften des Lichtleiters gezielt und präzise eingestellt werden.

In einer ferner bevorzugten Weiterentwicklung dieser Ausführungsform erhält die Leuchtvorrichtung durch die Wahl des ersten und zweiten Brechungsindex eine vorbestimmte Abstrahlcharakteristik. Bei Kraftfahrzeugen mit derart ausgeführten Leuchtvorrichtungen können selbige zur Erzeugung einer charakteristischen, wiedererkennbaren Abstrahlcharakteristik verwandt werden, über welche das Kraftfahrzeug eindeutig identifizierbar ist.

Bevorzugt ist das Karosserieteil als Stoßfänger ausgeführt. Ferner bevorzugt ist das Karosserieteil als Heckklappe ausgeführt. Bevorzugt ist der Leuchtvorrichtung eine Tagfahrlichtfunktion, eine Standlichtfunktion, eine Blinklichtfunktion oder eine beliebige andere Lichtfunktion zugeordnet. Ferner bevorzugt fungiert die Leuchtvorrichtung als Nebelschlusslicht, als Rückfahrlicht, als Blinklicht, als Tagfahrlicht, als eine Vorfeldleuchte, als eine Kennzeichenleuchte oder als Sidemarker. Des Weiteren bevorzugt ist die Leuchtvorrichtung in einer Fuge angeordnet, welche zwischen zwei Karosserieteilen gebildet ist.

Bevorzugt ist die Leuchtvorrichtung als Bremsleuchte ausgeführt und/oder im Heck des Kraftfahrzeuges angeordnet. Als Bremsleuchte, beispielsweise als hoch- oder tiefgesetzte Bremsleuchte trägt die Leuchtvorrichtung eines erfindungsgemäßen Kraftfahrzeugs im besonderen Maße zu einer besseren Wahrnehmbarkeit des Kraftfahrzeugs im Straßenverkehr bei.

Ausführungsbeispiele der Erfindung werden anhand der Zeichnungen und der nachfolgenden Beschreibung näher erläutert. Es zeigen:
- Figur 1: ein erstes Ausführungsbeispiel eines erfindungsgemäßen Kraftfahrzeugs,
- Figur 2: eine seitliche Ansicht des ersten Ausführungsbeispiels der Leuchtvorrichtung des erfindungsgemäßen Kraftfahrzeugs,
- Figur 3: eine Draufsicht auf die geschnitten dargestellte Leuchtvorrichtung des ersten Ausführungsbeispiels des erfindungsgemäßen Kraftfahrzeugs, und
- Figur 4: ein weiteres Ausführungsbeispiel einer Leuchtvorrichtung eines erfindungsgemäßen Kraftfahrzeuges.
- Figur 5: eine Draufsicht auf eine geschnittene Darstellung einer Leuchtvorrichtung eines weiteren Ausführungsbeispiels des erfindungsgemäßen Kraftfahrzeugs,
- Figur 6: eine Draufsicht auf eine geschnittene Darstellung einer Leuchtvorrichtung eines weiteren Ausführungsbeispiels des erfindungsgemäßen Kraftfahrzeugs,
- Figur 7a - 7b: zwei verschiedene seitliche Ansichten eines weiteren Ausführungsbeispiels einer Leuchtvorrichtung eines erfindungsgemäßen Kraftfahrzeugs, und
- Figur 8: die Lichteinkopplung in den Lichtleiter eines weiteren Ausführungsbeispiels einer Leuchtvorrichtung eines erfindungsgemäßen Kraftfahrzeugs.

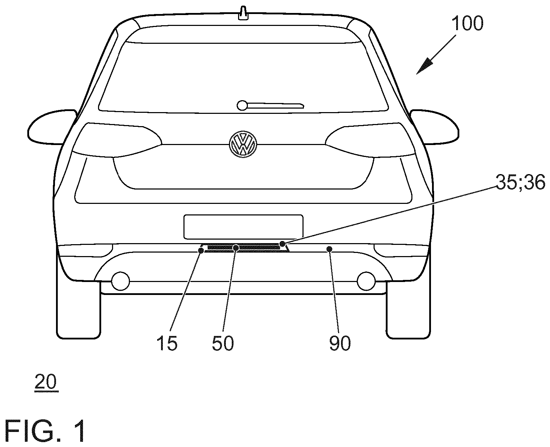

In der Figur 1 ist ein erstes Ausführungsbeispiel eines erfindungsgemäßen Kraftfahrzeugs 100 dargestellt. Das Kraftfahrzeug 100 umfasst ein Karosserieteil 90, welches einen inneren Bereich von einem äußeren Bereich 20 des Kraftfahrzeugs 100 teilweise räumlich trennt und eine Öffnung 15 aufweist. Bei dem Karosserieteil 90 handelt es sich in diesem ersten Ausführungsbeispiel rein beispielhaft um einen Stoßfänger, welcher am Heck des Kraftfahrzeugs 100 angebracht ist. Bei dem inneren Bereich handelt es sich um den innerhalb des Kraftfahrzeugs 100 befindlichen Bereich, während es sich bei dem äußeren Bereich 20 quasi um die Umgebung des Kraftfahrzeugs 100, also um einen zum Kraftfahrzeug 100 externen Bereich handelt. Das Kraftfahrzeug 100 weist eine Leuchtvorrichtung 50 auf, welche eine Vielzahl an Leuchtmitteln (nicht dargestellt) sowie einen Lichtleiter 35 mit einer Einkoppelfläche (nicht dargestellt) und einer Auskoppelfläche 36 aufweist, wobei die Einkoppelfläche vor dem mindestens einen Leuchtmittel angeordnet ist, so dass von dem Leuchtmittel emittiertes Licht in die Einkoppelfläche eingestrahlt wird (nicht dargestellt). Erfindungsgemäß ist die Leuchtvorrichtung 50 im Wesentlichen im inneren Bereich des Kraftfahrzeugs 100 angeordnet, wobei der Lichtleiter mit seiner Auskoppelfläche 36 von innen, also aus dem inneren Bereich in die Öffnung 15 des Karosserieteils 90 hineinragt. In diesem ersten Ausführungsbeispiel ist von der Leuchtvorrichtung 50 lediglich die Auskoppelfläche 36 des von innen in die Öffnung 15 des Stoßfängers hineinragenden Lichtleiters 35 zu sehen.

Es können auch erfindungsgemäße Kraftfahrzeuge 100 ausgeführt sein, bei welchen die Leuchtvorrichtung 50 in die Öffnung 15 eines anderen Karosserieteils 90 hineinragt, bei welchen das Karosserieteil 90 also nicht als Stoßfänger ausgeführt ist. Beispielsweise kann es sich bei dem Karosserieteil 90 des Kraftfahrzeugs 100 auch um die Heckklappe, oder aber auch um ein beliebiges anderes Karosserieteil 90 des Kraftfahrzeugs 100 handeln. Auch kann die erfindungsgemäße Leuchtvorrichtung 50 an einer anderen Position am Kraftfahrzeug 100 verbaut sein.

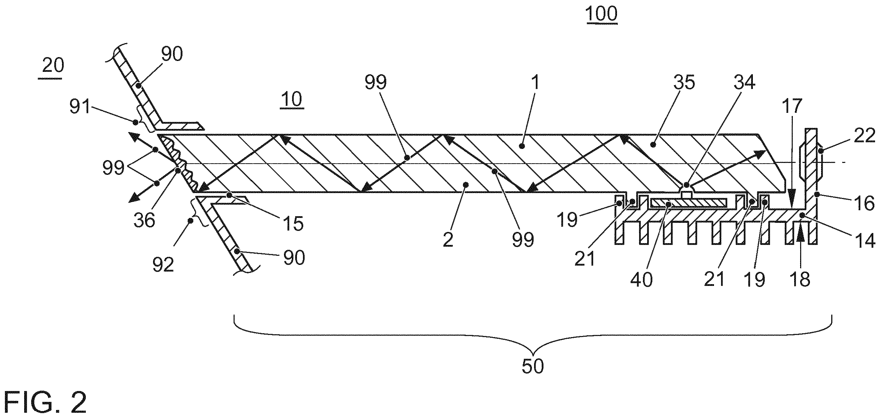

Die Figur 2 zeigt eine seitliche Ansicht des ersten Ausführungsbeispiels der erfindungsgemäßen Leuchtvorrichtung 50 des erfindungsgemäßen Kraftfahrzeugs 100. Mit anderen Worten ausgedrückt ist in der Figur 2 ein Querschnitt durch das Karosserieteil 90 sowie die hinter diesem Karosserieteil 90 im inneren Bereich 10 des Kraftfahrzeugs 100 angeordnete Leuchtvorrichtung 50 dargestellt. Der Querschnitt verläuft dabei in Längsrichtung durch das Kraftfahrzeug 100. Die gleich bezeichneten Komponenten in Figur 2 entsprechen jenen des ersten wie in Figur 1 dargestellten Ausführungsbeispiels. Somit ist das in der Beschreibung zu der Figur 1 zu diesen Komponenten geschriebene auch auf die in Figur 2 gleich bezeichneten Komponenten zu übertragen.

In dem ersten Ausführungsbeispiel umfasst die Leuchtvorrichtung 50 einen Kühlkörper 14, welcher dazu ausgebildet ist, die Vielzahl an Leuchtmitteln 40, von denen in Figur 2 lediglich eines im Querschnitt dargestellt ist sowie den Lichtleiter 35 aufzunehmen und die Leuchtmittel 40 zu kühlen. Genauer ausgedrückt ist die Vielzahl der Leuchtmittel 40 sowie der Lichtleiter 35 in diesem ersten Ausführungsbeispiel rein beispielhaft fest mit dem Kühlkörper 14 verbunden, wobei der Kühlkörper 14 selbst im inneren Bereich 10 des Kraftfahrzeugs 100 fest mit selbigem verbunden ist (nicht dargestellt). Der Kühlkörper 14 weist in diesem ersten Ausführungsbeispiel rein beispielhaft einen im Wesentlichen "L"-Förmigen Querschnitt mit einer Innenseite 17 und einer Außenseite 18 auf. Während der Kühlkörper 14 auf seiner Außenseite 18 eine Vielzahl an Kühlrippen aufweist, sind in diesem ersten Ausführungsbeispiel rein beispielhaft auf der Innenseite 17 des Kühlkörpers 14 zwei "U"-förmig ausgeformte Halteschienen 19 angeordnet. Zwischen diesen beiden Halteschienen 19 ist in diesem ersten Ausführungsbeispiel eine elektronische Platine angeordnet, auf welcher die Vielzahl der in diesem ersten Ausführungsbeispiel als LEDs, also als Leuchtdioden ausgeführten Leuchtmittel 40 angeordnet sind und welche die Leuchtmittel 40 im Betrieb speist. Der Lichtleiter 35 weist in diesem ersten Ausführungsbeispiel die Form einer Platte auf, welche an ihrer Unterseite zwei sich über einen wesentlichen Teil der Breite der Platte erstreckende Befestigungsnasen 21 beziehungsweise Stege 21, also an den Lichtleiter 35 angeformte Rippen 21 aufweist, welche passgenau in die Halteschienen 19 des Kühlkörpers 14 eingeführt sind. Die an dem Lichtleiter 35 angeformten Rippen 21 sind unmittelbar vor und hinter der Einkoppelfläche 34, an der Unterseite des Lichtleiters 35 angebracht. Mit anderen Worten ausgedrückt sind die Rippen 21 benachbart zu der Einkoppelfläche 34 des Lichtleiters 35, also in direkter Nähe zu der Einkoppelfläche 34 des Lichtleiters 35 beziehungsweise in direkter Nähe zu der Stelle der Lichteinkopplung an den Lichtleiter 35 angeformt. Der Kühlkörper 14 ist in diesem ersten Ausführungsbeispiel genauso breit wie der als Platte ausgeführte Lichtleiter 35. Ferner sind die angeformten Rippen 21 des Lichtleiters 35 in diesem ersten Ausführungsbeispiel in die Halteschienen 19 des Kühlkörpers 14 eingeklebt. Es können allerdings auch andere Formen der Verbindung zwischen dem Lichtleiter 35 und dem Kühlkörper 14 realisiert werden. Beispielsweise kann der Lichtleiter 35 auch über eine form- oder kraftschlüssige Verbindung mit dem Kühlkörper 14 verbunden sein.

Sind der Lichtleiter 35 und das Leuchtmittel 40 von dem Kühlkörper 14 aufgenommen beziehungsweise mit dem Kühlkörper 14 verbunden, so strahlen die Leuchtmittel 40 im Betrieb Licht in die Einkoppelfläche 34 des Lichtleiters 35 ein. In diesem ersten Ausführungsbeispiel weist der Lichtleiter 35 im an seiner Einkoppelfläche 34 beziehungsweise in dem Bereich der Lichteinstrahlung durch die Leuchtmittel 40 eine Aussparung auf, welche sich als Rille durch die Unterseite des Lichtleiters 35 über dessen gesamte Breite erstreckt. An der Hinterseite 16 des Kühlkörpers 14 weist selbiger in diesem ersten Ausführungsbeispiel zwei optionale Klemmen 22 auf, über welche der Kühlkörper 14 samt Leuchtvorrichtung 50 im Kraftfahrzeug 100 mittels einer Klemmverbindung befestigt ist (nicht dargestellt). In diesem ersten Ausführungsbeispiel ist die Einkoppelfläche 34 wie bereits erwähnt durch eine Aussparung an der Unterseite des Lichtleiters 35 gebildet. Es können allerdings auch andere Ausführungsbeispiele von Leuchtvorrichtungen 50 erfindungsgemäßer Kraftfahrzeuge 100 realisiert werden, bei welchen die Einkoppelfläche 34 durch einen Kollimator, beziehungsweise durch eine Kollimationslinse oder durch eine Fresnel Optik, also zum Beispiel durch eine Fresnel-Linse oder durch ein weiteres Lichtleitelement mit einer zu der Einkoppelfläche 34 des Lichtleiters 35 parallelen Auskoppelseite oder aber auch ganz anders ausgebildet sein.

In diesem ersten Ausführungsbeispiel ist der Lichtleiter 35 rein beispielhaft als zwei-Komponenten-Kunststoff ausgeführt. Dabei weist die erste Komponente 1 des zwei-Komponenten-Kunststoffs einen ersten Brechungsindex auf und die zweite Komponente 2 des zwei-Komponenten-Kunststoffs einen zweiten Brechungsindex auf. Ferner handelt es sich bei dem Lichtleiter 35 in diesem ersten Ausführungsbeispiel um einen totalreflektierenden Lichtleiter 35. Durch die Wahl des ersten und zweiten Brechungsindex erhält die Leuchtvorrichtung 50 eine vorbestimmte Abstrahlcharakteristik, da über die Brechungsindizes der ersten und zweiten Komponente 1, 2 die Lichtdurchmischung innerhalb des Lichtleiters 35 eingestellt werden kann. Die Auskoppelfläche 36 des Lichtleiters 35 ist in diesem ersten Ausführungsbeispiel rein beispielhaft glatt und weist keine Optik auf. Es können allerdings auch erfindungsgemäße Kraftfahrzeuge 100 mit Leuchtvorrichtungen 50 ausgeführt werden, bei welchen auf den Auskoppelflächen 36 Optiken vorgesehen sind. Bei diesen Optiken kann es sich rein beispielhaft um Kissenoptiken oder Rillenoptiken oder aber auch um andere Optiken beziehungsweise Typen von Optiken handeln.

Ferner ist in diesem ersten Ausführungsbeispiel ein lichtstreuender Kunststoff in die Auskoppelfläche 36 des Lichtleiters 35 eingebracht, durch welchen dass aus der Auskoppelfläche 36 des Lichtleiters 35 austretende Licht 99 gestreut wird. Die Auskoppelfläche 36 des in die Öffnung 15 des Karosserieteils 90 hineinragenden Lichtleiters 35 schließt in diesem ersten Ausführungsbeispiel flächig mit den die Ränder der Öffnung 15 bildenden Abschnitten 91, 92 des Karosserieteils 90 ab. Mit anderen Worten ausgedrückt liegt die Auskoppelfläche 36 in einer Ebene mit den die Ränder der Öffnung 15 bildenden Abschnitten 91, 92 des Karosserieteils 90. Somit bilden das Karosserieteil 90 und die Auskoppelfläche 36 des Lichtleiters 35 eine, von dem äußeren Bereich 20 aus betrachtet, durchgehende Außenkontur. In diesem ersten Ausführungsbeispiel ist die Auskoppelfläche 36 des Lichtleiters 35 sehr flach ausgeführt und füllt die in diesem ersten Ausführungsbeispiel als Spalt beziehungsweise als Fuge ausgebildete Öffnung 15 des Karosserieteils 90 aus. In diesem ersten Ausführungsbeispiel weist die Auskoppelfläche 36 des Lichtleiters 35 eine Höhe von rein beispielhaft ca. 0,5 cm auf. Es können auch erfindungsgemäße Kraftfahrzeuge 100 mit erfindungsgemäßen Leuchtvorrichtungen 50 ausgeführt sein, bei welchen die Öffnung 15 durch zwei oder gar mehr als zwei Karosserieteile 90 beziehungsweise zwei Teil-Karosserieteile gebildet ist beziehungsweise bereitgestellt wird. In diesem ersten Ausführungsbeispiel sind die Ränder der Öffnung 15 in den inneren Bereich 10 hineingebogen und rein beispielhaft um die Öffnung 15 und damit um die Auskoppelfläche 36 beziehungsweise um das auskoppelseitige Ende des Lichtleiters 35 umlaufend ausgeführt. Die nach innen, also in den inneren Bereich 10 des Karosserieteils 90 gebogenen Abschnitte des Karosserieteils 90, welche sich an die die Ränder der Öffnung 15 bildenden Abschnitte 91, 92 des Karosserieteils 90 anschließen, verlaufen in diesem ersten Ausführungsbeispiel parallel zu dem als Platte ausgeführten Lichtleiter 35.

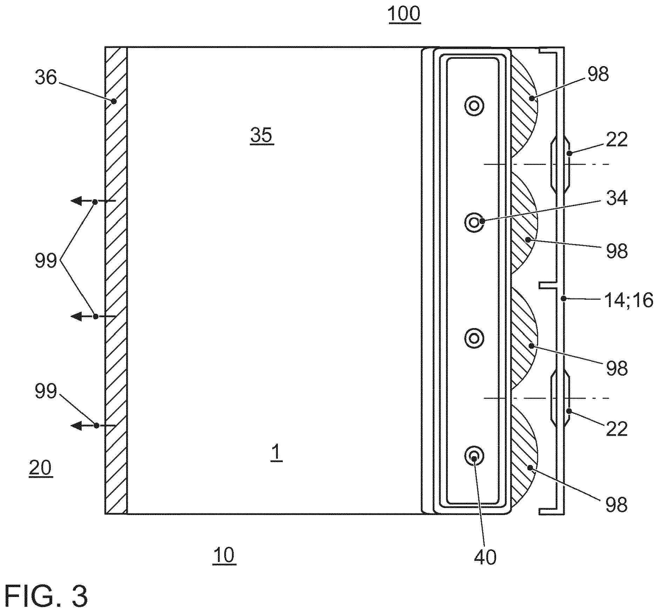

Die Figur 3 zeigt eine Draufsicht auf die geschnitten dargestellte Leuchtvorrichtung 50 des ersten Ausführungsbeispiels des erfindungsgemäßen Kraftfahrzeugs 100. Mit anderen Worten ausgedrückt zeigt die Figur 3 einen zu dem in der Figur 2 dargestellten Querschnitt orthogonal verlaufenden Querschnitt durch die in der Figur 2 gezeigte Leuchtvorrichtung 50. In dieser Darstellung ist der als Platte ausgeführte Lichtleiter 35 gezeigt, wobei die Leuchtvorrichtung 50 im Betrieb dargestellt ist. Vier Leuchtmittel 40 strahlen Licht 99 in die Einkoppelfläche 34 des Lichtleiters 35 ein, welches in diesem innerhalb des Lichtleiters 35 zur Auskoppelfläche 36 reflektiert wird. Deutlich zu erkennen sind auch die rückseitig aus dem Lichtleiter 35 ausgeworfenen Lichtkegel 98, welche von den Leuchtmitteln 40 erzeugt werden. Auch die Auskoppelfläche 36 des Lichtleiters ist durch den eingebrachten, lichtstreuenden Kunststoff deutlich erkennbar. Ferner ist deutlich zu erkennen, dass der Kühlkörper 14 an seiner Hinterseite 16 in diesem ersten Ausführungsbeispiel rein beispielhaft zwei Klemmen 22 aufweist, über welche er samt der mit ihm verbundenen Leuchtvorrichtung 50 mit dem Kraftfahrzeug 100 verbunden ist (nicht dargestellt).

In diesem ersten Ausführungsbeispiel des erfindungsgemäßen Kraftfahrzeugs 100 weist die Leuchtvorrichtung 50 rein beispielhaft ein Gehäuse (nicht dargestellt), aber keine Außenlichtscheibe auf. Es können allerdings auch erfindungsgemäße Kraftfahrzeuge 100 ausgeführt werden, in welchen die Leuchtvorrichtungen 50 kein Gehäuse und keine Außenlichtscheibe aufweisen.

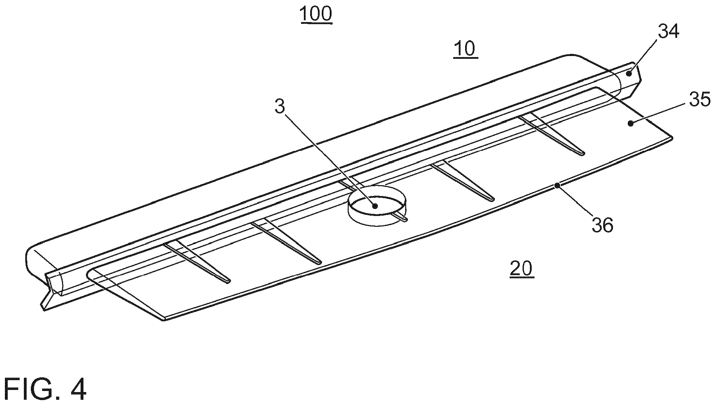

In Figur 4 ist ein weiteres Ausführungsbeispiel einer erfindungsgemäßen Leuchtvorrichtung 50 eines erfindungsgemäßen Kraftfahrzeuges 100 dargestellt. Dieses weitere Ausführungsbeispiel ist im Wesentlichen identisch zu dem in Figur 2 und 3 dargestellten Ausführungsbeispiel einer erfindungsgemäßen Leuchtvorrichtung 50 eines erfindungsgemäßen Kraftfahrzeugs 100. Die gleich bezeichneten Komponenten in Figur 4 entsprechen also den in der Figur 2 und 3 dargestellten beziehungsweise denen in der zugehörigen Beschreibung beschriebenen.

Im Gegensatz zu dem in Figur 2 und 3 dargestellten Ausführungsbeispiel einer erfindungsgemäßen Leuchtvorrichtungen 50 weist der Lichtleiter 35 des in Figur 4 dargestellten, weiteren Ausführungsbeispiels einer erfindungsgemäßen Leuchtvorrichtung 50 eine zum äußeren Bereich 20 hin spitz zulaufende Kante auf. Mit anderen Worten ausgedrückt weist der Lichtleiter 35 einen keilförmigen Querschnitt auf. Des Weiteren weist der Lichtleiter 35 in diesem weiteren Ausführungsbeispiel eine mittig angeordnete Aussparung 3 auf, welche in diesem Ausführungsbeispiel als durchgehende Öffnung ausgebildet ist, die rein beispielhaft einen runden Rand aufweist. Es können allerdings auch erfindungsgemäße Kraftfahrzeuge 100 mit Leuchtvorrichtungen 50 und Aussparungen 3 ausgeführt werden, welche eine von der in Figur 4 dargestellten Geometrie abweichende Geometrie aufweisen.

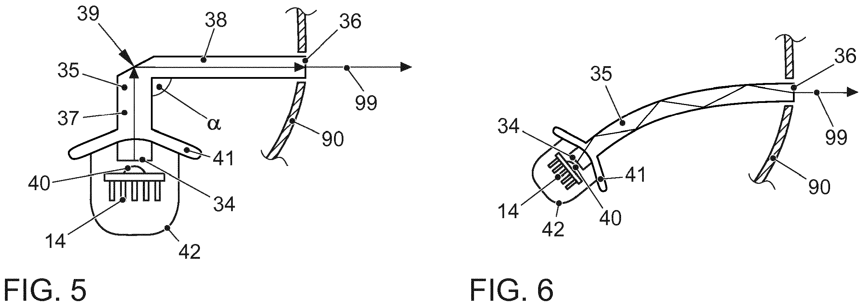

Figur 5 zeigt eine Draufsicht auf eine geschnittene Darstellung einer Leuchtvorrichtung 50 eines erfindungsgemäßen Kraftfahrzeugs 100 in einem weiteren Ausführungsbeispiel. Die Leuchtvorrichtung 50 umfasst einen Kühlkörper 14, welcher dazu ausgebildet ist, eine Vielzahl an Leuchtmitteln 40 sowie den Lichtleiter 35 aufzunehmen und die Leuchtmittel 40 zu kühlen, von welchem in Figur 5 lediglich eines dargestellt ist. In diesem weiteren Ausführungsbeispiel weist der Lichtleiter 35 eine angewinkelte Form auf.

Der Lichtleiter 35 weist ferner einen ersten Lichtleiterbereich 37 und einen zweiten Lichtleiterbereich 38 auf, wobei der erste Lichtleiterbereich 37 den Leuchtmitteln 40 und somit der Einkoppelfläche 34 zugewandt ist, während der zweite Lichtleiterbereich 38 einem Karosserieteil 90 und der Auskoppelfläche 36 des Lichtleiters 35 zur Auskopplung des Lichtes, welches durch die Leuchtmittel 40 in den Lichtleiter 35 eingestrahlt und durch den Lichtleiter 35 geführt wird, zugewandt ist. Der erste Lichtleiterbereich 37 ist dabei in einem vorbestimmten Winkel α zum zweiten Lichtleiterbereich 38 angeordnet. Dieser Winkel α beträgt in dem hier gezeigten Ausführungsbeispiel 90°, er kann aber auch einen Wert zwischen 0° und 90° aufweisen. Zwischen dem ersten Lichtleiterbereich 37 und dem zweiten Lichtleiterbereich 38 weist der Lichtleiter 35 im Bereich seiner Krümmung einen Spiegel 39 auf, der als Totalreflektionsspiegel ausgeführt und dazu geeignet ist, das Licht 99, welches durch die Leuchtmittel 40 an der Einkoppelfläche 34 in den Lichtleiter 35 eingebracht wird, von dem ersten Lichtleiterbereich 37 in den zweiten Lichtleiterbereich 38 und somit zur Auskoppelfläche 36 zu führen beziehungsweise zu reflektieren. Der Lichtleiter 35 weist im Bereich seiner Einkoppelfläche 34 eine im Querschnitt "Y-förmige" Gabelung 41 auf, welche aus dem Lichtleiter 35 heraus geformt ist. Mit dieser Gabelung 41 verbunden ist in diesem Ausführungsbeispiel ein rein beispielhaft längliches, im Querschnitt topfförmiges Gehäuse 42, in welches die Einkoppelfläche 34 des Lichtleiters 35 hineinragt und in welchem der Kühlkörper 14 sowie die Leuchtmittel 40 angeordnet sind. Der Lichtleiter 35 selbst ist in diesem weiteren Ausführungsbeispiel nicht in einem Gehäuse angeordnet.

Figur 6 zeigt eine Draufsicht einer geschnittenen Darstellung einer Leuchtvorrichtung 50 in einem weiteren Ausführungsbeispiel. Die Leuchtvorrichtung 50 umfasst einen Kühlkörper 14, welcher dazu ausgebildet ist, eine Vielzahl an Leuchtmitteln 40 sowie den Lichtleiter 35 aufzunehmen und die Leuchtmittel 40 zu kühlen. Der Lichtleiter 35 ist dazu ausgebildet, das Licht 99, welches durch das Leuchtmittel 40 in die Einkoppelfläche 34 des Lichtleiters 35 eingespeist wird, zu einer Auskoppelfläche 36, welche sich im Bereich eines Karosserieteils 90 befindet, zu führen. Dabei ist der Lichtleiter 35 gekrümmt ausgebildet. Auch in diesem weiteren Ausführungsbeispiel erfolgt die Lichteinkopplung über in einem wie oben beschriebenen Gehäuse 42 angeordnete, auf einem Kühlkörper 14 befindliche Leuchtmittel 40.

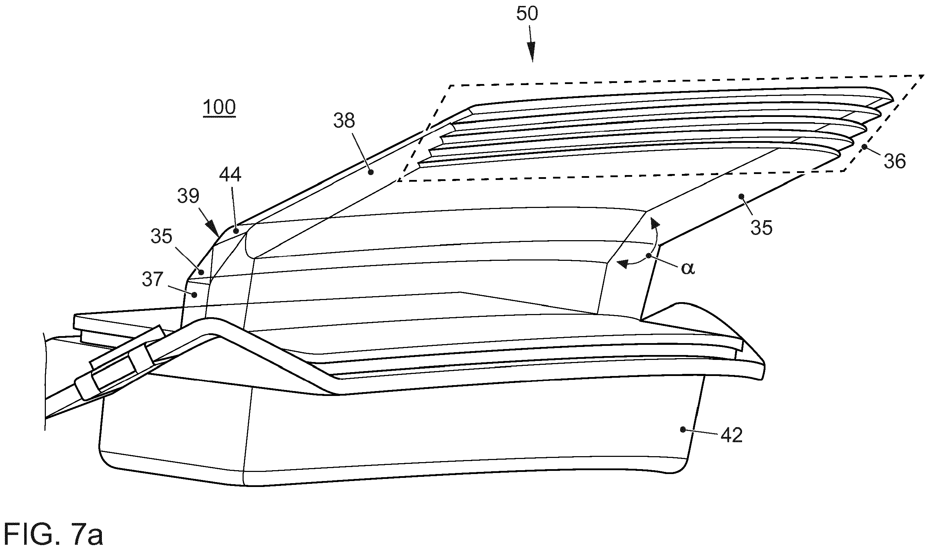

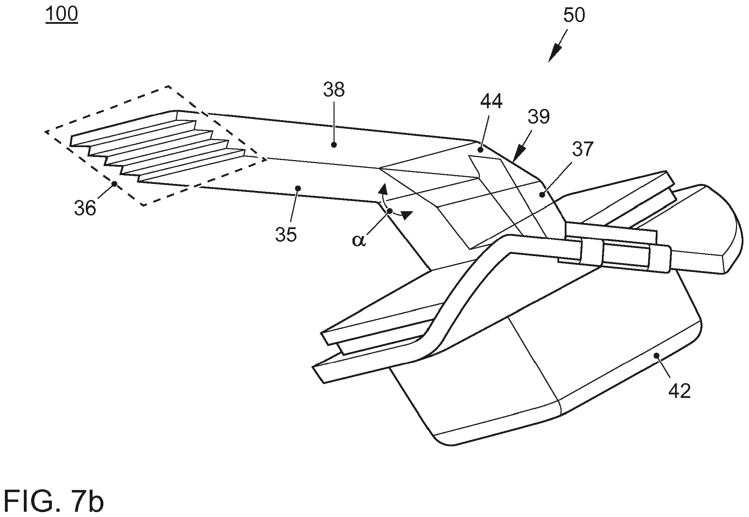

In den Figuren 7a und 7b sind zwei verschiedene seitliche Ansichten des in Figur 5 im Querschnitt dargestellten weiteren Ausführungsbeispiels einer Leuchtvorrichtung 50 eines erfindungsgemäßen Kraftfahrzeugs 100 dargestellt. In Figur 7a ist eine Längsseite der Leuchtvorrichtung 50 dargestellt, während in Figur 7b eine Breitseite der Leuchtvorrichtung 50 gezeigt ist. In den Figuren 7a und 7b ist das bereits beschriebene Gehäuse 42 geschlossen dargestellt, so dass der darin angeordnete Kühlkörper 14, samt den auf diesem angeordneten Leuchtmitteln 40 und der Einkoppelfläche 34 des Lichtleiters 35 verdeckt ist. Der Lichtleiter 35 weist wie zuvor beschrieben einen ersten und einen zweiten Lichtleitbereich 37 und 38 auf, welche zueinander in einem Winkel α angewinkelt sind. Der erste und der zweite Lichtleitbereich 37 und 38 sind über einen Schrägabschnitt 44 des Lichtleiters 35 miteinander verbunden. Im Bereich des Winkels α ist wie bereits zu Figur 5 beschrieben auf dem Schrägabschnitt 44 des Lichtleiters 35 ein Spiegel 39 angebracht, welcher in die Einkoppelfläche 34 (nicht dargestellt) eingekoppeltes Licht 99 von dem ersten Lichtleitbereich 37 in den zweiten Lichtleitbereich 38 hinein reflektiert. Die Auskoppelfläche 36 wird in diesem weiteren Ausführungsbeispiel aus einer Vielzahl von Fächern, in diesem weiteren Ausführungsbeispiel rein beispielhaft aus fünf Fächern gebildet, welche treppenförmig zueinander angeordnet sind und Licht auszukoppeln vermögen. Mit anderen Worten ausgedrückt weist der Lichtleiter 35 an seiner Auskoppelseite 36 eine Vielzahl an Auskoppelstrukturen auf, welche jeweils scheibenförmig aus der Auskoppelseite 36 hervorragen und gemeinsam im Querschnitt betrachtet ein treppenförmiges Profil aufweisen. Es können ferner auch Leuchtvorrichtungen 50 erfindungsgemäßer Kraftfahrzeuge 100 ausgeführt werden, welche ein mehrteiliges Gehäuse 42 aufweisen. Ferner kann insbesondere in derartig ausgeführten Leuchtvorrichtungen 50 zwischen den Teilen des Gehäuses 42 Bauraum für weitere Komponenten des Kraftfahrzeugs 100 freigehalten sein, über welche der Lichtleiter 35 hinaus beziehungsweise hinweg ragt. Bei solchen Komponenten kann es sich beispielsweise um eine Kamera, zum Beispiel eine Rückfahrkamera beziehungsweise eine Rücksichtkamera handeln.

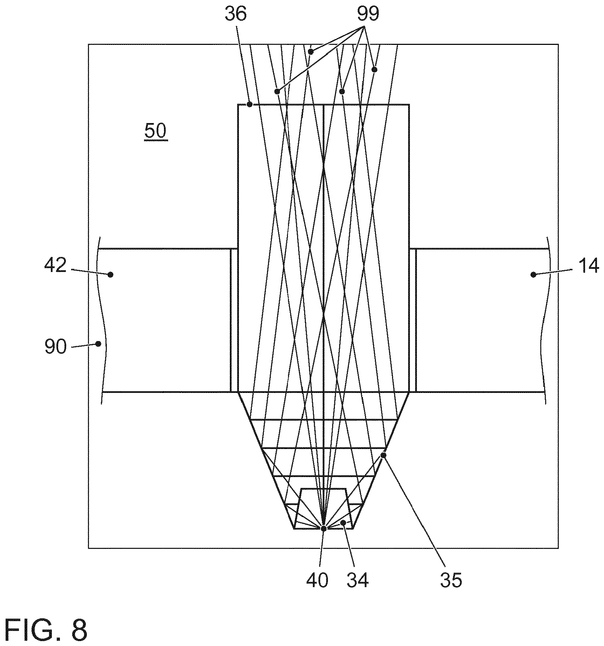

In Figur 8 ist die Lichteinkopplung in den Lichtleiter 35 eines weiteren Ausführungsbeispiels einer Leuchtvorrichtung 50 eines erfindungsgemäßen Kraftfahrzeuges 100 dargestellt. Dabei ist in Figur 8 ein Lichtleiter 35 eines weiteren Ausführungsbeispiels einer Leuchtvorrichtung 50 im Querschnitt gezeigt, welcher an seinem unteren Ende eine Einkoppelfläche 34 aufweist, in welche mittels eines Leuchtmittels 40 Licht eingekoppelt wird. Am oberen Ende des in Figur 8 dargestellten Lichtleiters 35 ist dessen Auskoppelseite 36 gezeigt, aus welcher das in die Einkoppelseite 34 eingekoppelte Licht 99 ausgekoppelt wird. Rechts in Figur 8 ist ein Teil eines Kühlkörpers 14 gezeigt, welcher eine Halteschiene (nicht dargestellt) aufweist, in welche eine am Lichtleiter 35 angeformte Rippe (nicht dargestellt) zum Zwecke der Verbindung zwischen Lichtleiter 35 und Kühlkörper 14 eingeführt ist. Links in Figur 8 ist ein Teil eines Gehäuses 42 dargestellt, welches seinerseits mit einem Karosserieteil 90 verbunden ist. Der Lichtleiter 35 ist in gleicher Weise, wie er mit dem Kühlkörper 14 verbunden ist, mit dem Gehäuse über eine an dem Lichtleiter 35 angeformte Rippe verbunden.

Da die Rippen sehr nahe an der Einkoppelfläche 34 des Lichtleiters 35 angebracht sind, werden in diesem Bereich nur sehr wenige der Lichtstrahlen über Totalreflektion an die Wand des Lichtleiters 35 reflektiert. Somit ist der optische Verlust allenfalls sehr gering und die optische Effizienz des Lichtleiters 35 beziehungsweise der Leuchtvorrichtung 50 sehr hoch.

## Patentansprüche

1. Kraftfahrzeug (100), umfassend
- ein Karosserieteil (90), welches einen inneren Bereich (10) von einem äußeren Bereich (20) des Kraftfahrzeugs (100) zumindest teilweise räumlich trennt und eine Öffnung (15) aufweist,
- eine Leuchtvorrichtung (50), umfassend
- mindestens ein Leuchtmittel (40),
- einen Lichtleiter (35) mit einer Einkoppelfläche (34) und einer Auskoppelfläche (36), wobei die Einkoppelfläche (34) vor dem mindestens einen Leuchtmittel (40) angeordnet ist, so dass von dem Leuchtmittel (40) emittiertes Licht (99) in die Einkoppelfläche (34) eingestrahlt wird, die Leuchtvorrichtung (50) im inneren Bereich (10) des Kraftfahrzeugs (100) angeordnet ist, und der Lichtleiter (35) mit seiner Auskoppelfläche (36) von innen in die Öffnung (15) des Karosserieteils (90) hineinragt, dass der Lichtleiter (35) totalreflektierend ausgeführt ist und die Einkoppelfläche (34) durch einen Kollimator gebildet ist oder diesen umfasst, **dadurch gekennzeichnet, dass** ein lichtstreuender Kunststoff in die Auskoppelfläche (36) des Lichtleiters (35) eingebracht ist.

2. Kraftfahrzeug (100) nach Anspruch 1, **dadurch gekennzeichnet, dass** die Leuchtvorrichtung (50) ferner einen Kühlkörper (14) umfasst, welcher dazu ausgebildet ist, das mindestens eine Leuchtmittel (40) sowie den Lichtleiter (35) aufzunehmen und das Leuchtmittel (40) zu kühlen.

3. Kraftfahrzeug (100) nach Anspruch 2, **dadurch gekennzeichnet, dass** sowohl das mindestens eine Leuchtmittel (40) als auch der Lichtleiter (35) fest mit dem Kühlkörper (14) verbunden sind und wobei der Kühlkörper (14) im inneren Bereich (10) fest mit dem Kraftfahrzeug (100) verbunden ist.

4. Kraftfahrzeug (100) nach einem der Ansprüche 1 bis 3, **dadurch gekennzeichnet, dass** die Auskoppelfläche (36) des Lichtleiters (35) flächig mit den die Ränder der Öffnung (15) bildenden Abschnitten (91, 92) des Karosserieteils (90) abschließt.

5. Kraftfahrzeug (100) nach Anspruch 4, **dadurch gekennzeichnet, dass** die Auskoppelfläche (36) in einer Ebene mit den die Ränder der Öffnung (15) bildenden Abschnitten (91, 92) des Karosserieteils (90) liegt.

6. Kraftfahrzeug (100) nach einem der Ansprüche 1 bis 5, **dadurch gekennzeichnet, dass** der Lichtleiter (35) als zwei-Komponenten-Kunststoff ausgeführt ist.

7. Kraftfahrzeug (100) nach Anspruch 6, **dadurch gekennzeichnet, dass** die erste Komponente (1) des zwei-Komponenten-Kunststoffs einen ersten Brechungsindex aufweist, welcher von dem zweiten Brechungsindex der zweiten Komponente (2) verschieden ist.

8. Kraftfahrzeug (100) nach Anspruch 7, **dadurch gekennzeichnet, dass** die Leuchtvorrichtung (50) durch die Wahl des ersten und zweiten Brechungsindex eine vorbestimmte Abstrahlcharakteristik erhält.

9. Kraftfahrzeug (100) nach einem der Ansprüche 1 bis 8, **dadurch gekennzeichnet, dass** das Karosserieteil (90) als Stoßfänger ausgeführt ist.

10. Kraftfahrzeug (100) nach einem der Ansprüche 1 bis 9, **dadurch gekennzeichnet, dass** die Leuchtvorrichtung (50) als Bremsleuchte ausgeführt und/oder im Heck des Kraftfahrzeuges (100) angeordnet ist.

## Claims

1. Motor vehicle (100), comprising
- a chassis part (90) that at least partially spatially separates an inner region (10) from an outer region (20) of the motor vehicle (100) and has an opening (15),
- a light-emitting apparatus (50), comprising
- at least one light-emitting means (40),
- a light guide (35) having an input coupling face (34) and an output coupling face (36), wherein the input coupling face (34) is arranged in front of the at least one light-emitting means (40) so that light (99) emitted by the light-emitting means (40) is radiated into the input coupling face (34), the light-emitting apparatus (50) is arranged in the inner region (10) of the motor vehicle (100), and the light guide (35) protrudes with its output coupling face (36) from the inside into the opening (15) of the chassis part (90), that the light guide (35) is designed for total internal reflection, and the input coupling face (34) is formed by a collimator or comprises the latter, **characterized in that** a light-scattering plastic is incorporated in the output coupling face (36) of the light guide (35).

2. Motor vehicle (100) according to Claim 1, **characterized in that** the light-emitting apparatus (50) furthermore comprises a heat sink (14) embodied to accommodate the at least one light-emitting means (40) and the light guide (35) and to cool the light-emitting means (40).

3. Motor vehicle (100) according to Claim 2, **characterized in that** both the at least one light-emitting means (40) and the light guide (35) are fixedly connected to the heat sink (14) and wherein the heat sink (14) is fixedly connected, in the inner region (10), to the motor vehicle (100).

4. Motor vehicle (100) according to one of Claims 1 to 3, **characterized in that** the output coupling face (36) of the light guide (35) terminates flush with the portions (91, 92) of the chassis part (90) that form the peripheries of the opening (15).

5. Motor vehicle (100) according to Claim 4, **characterized in that** the output coupling face (36) lies in one plane with the portions (91, 92) of the chassis part (90) that form the peripheries of the opening (15).

6. Motor vehicle (100) according to one of Claims 1 to 5, **characterized in that** the light guide (35) is embodied as a two-component plastic.

7. Motor vehicle (100) according to Claim 6, **characterized in that** the first component (1) of the two-component plastic has a first refractive index that differs from the second refractive index of the second component (2).

8. Motor vehicle (100) according to Claim 7, **characterized in that** the light-emitting apparatus (50) acquires a predetermined radiation pattern due to the selection of the first and second refractive indices.

9. Motor vehicle (100) according to one of Claims 1 to 8, **characterized in that** the chassis part (90) is designed as a bumper.

10. Motor vehicle (100) according to one of Claims 1 to 9, **characterized in that** the light-emitting apparatus (50) is designed to be a brake light and/or is arranged at the rear of the motor vehicle (100).

## Revendications

1. Véhicule automobile (100) comprenant
- une partie de carrosserie (90) qui sépare au moins en partie spatialement une zone intérieure (10) d'une zone extérieure (20) du véhicule automobile (100) et qui comporte une ouverture (15),
- un dispositif d'éclairage (50) comprenant
- au moins un moyen d'éclairage (40),
- un guide de lumière (35) pourvu d'une surface d'injection par couplage (34) et une surface de sortie par couplage (36), la surface d'injection par couplage (34) étant disposée devant l'au moins un moyen d'éclairage (40) de sorte que la lumière (99) émise par le moyen d'éclairage (40) est injectée dans la surface d'injection par couplage (34), le dispositif d'éclairage (50) étant disposé dans la zone intérieure (10) du véhicule automobile (100), et le guide de lumière (35) faisant saillie par sa surface de sortie par couplage (36) depuis l'intérieur dans l'ouverture (15) de la partie de carrosserie (90), le guide de lumière (35) étant conçu pour être totalement réfléchissant et la surface d'injection par couplage (34) étant formée par un collimateur ou comprenant celui-ci, **caractérisé en ce qu'**une matière synthétique diffusant la lumière est introduite dans la surface de sortie par couplage (36) du guide de lumière (35).

2. Véhicule automobile (100) selon la revendication 1, **caractérisé en ce que** le dispositif d'éclairage (50) comprend en outre un dissipateur thermique (14) qui est conçu pour recevoir l'au moins un moyen d'éclairage (40) et le guide de lumière (35) et pour refroidir le moyen d'éclairage (40).

3. Véhicule automobile (100) selon la revendication 2, **caractérisé en ce que** l'au moins un moyen d'éclairage (40) et le guide de lumière (35) sont reliés de manière fixe au dissipateur thermique (14), le dissipateur thermique (14) étant relié de manière rigide dans la région intérieure (10) au véhicule automobile (100).

4. Véhicule automobile (100) selon l'une des revendications 1 à 3, **caractérisé en ce que** la surface de sortie par couplage (36) du guide de lumière (35) se termine de manière sensiblement bidimensionnelle par les portions (91, 92) de la partie de carrosserie (90) formant les bords de l'ouverture (15).

5. Véhicule automobile (100) selon la revendication 4, **caractérisé en ce que** la surface de sortie par couplage (36) est située dans un plan comprenant les portions (91, 92) de la partie de carrosserie (90) qui forment les bords de l'ouverture (15).

6. Véhicule automobile (100) selon l'une des revendications 1 à 5, **caractérisé en ce que** le guide de lumière (35) est réalisé en matière synthétique à deux composants.

7. Véhicule automobile (100) selon la revendication 6, **caractérisé en ce que** le premier composant (1) de la matière synthétique à deux composants a un premier indice de réfraction qui est différent du deuxième indice de réfraction du deuxième composant (2).

8. Véhicule automobile (100) selon la revendication 7, **caractérisé en ce que** la caractéristique d'émission du dispositif d'éclairage (50) est prédéterminée par le choix du premier et du deuxième indice de réfraction.

9. Véhicule automobile (100) selon l'une des revendications 1 à 8, **caractérisé en ce que** la partie de carrosserie (90) est réalisée sous forme de pare-chocs.

10. Véhicule automobile (100) selon l'une des revendications 1 à 9, **caractérisé en ce que** le dispositif d'éclairage (50) est réalisé sous forme de feu stop et/ou est disposé à l'arrière du véhicule automobile (100).
